# EUROPÄISCHE PATENTANMELDUNG

(11) **EP 1 039 272 A2**
(43) Veröffentlichungstag der Anmeldung: **27.09.2000**
(21) Anmeldenummer: 00105795.9
(22) Anmeldetag: 18.03.2000
(51) Int. Cl.: G01F 23/284

(54) **Niveauabhängige Steuerung von Pumpen**

(30) Priorität: 25.03.1999 DE 19913530
(71) Anmelder: KSB Aktiengesellschaft, 67227 Frankenthal (DE)
(72) Erfinder: Heinrich, Hansjörg, 91257 Pegnitz (DE); Wagner, Klaus, Dr., 67112 Mutterstadt (DE)

(57) **Zusammenfassung**

Gegenstand der Erfindung ist eine Vorrichtung mit einem Flüssigkeit aufnehmenden Behälter und einer Steuereinrichtung, welche eine oder mehrere Pumpen in Abhängigkeit von der Höhe des Flüssigkeitsstandes in dem Behälter ein- oder ausschaltet.

Es soll eine Steuereinrichtung vorgeschlagen werden, deren Teile, also auch die den Flüssigkeitsstand messenden und übermittelnden Teile, sämtlich außerhalb des Behälters angeordnet sind.

Dies wird erfindungsgemäß verwirklicht durch ein oder mehrere, mit der Steuereinrichtung (10) verbundene Module (8), welche an der Außenseite einer Wand des Behälters (6) angeordnet sind und welche über diese Wand physikalische Wellen aussenden und die erfolgende Reflexion der Wellen auswerten, wobei zumindest in dem für die Aussendung und Auswertung in Anspruch genommenen Bereich die Wand des Behälters (6) aus einem die verwendete Wellenart leitenden Material besteht und wobei das oder die Module (8) bezüglich ihrer Auswertung auf ein oder mehrere vorgegebene Flüssigkeitsniveaus festgelegt sind.

## Beschreibung

Die Erfindung betrifft eine Vorrichtung mit einem Flüssigkeit aufnehmenden Behälter und einer Steuereinrichtung, welche eine oder mehrere Pumpen in Abhängigkeit von der Höhe des Flüssigkeitsstandes in dem Behälter ein- oder ausschaltet. Außerdem werden Verfahren zum Betrieb einer solchen Vorrichtung vorgeschlagen und bevorzugte Verwendungen dieser Vorrichtung benannt.

In dem Bestreben, eine derartige Vorrichtung möglichst einfach und unempfindlich zu halten, war man um eine Gestaltung bemüht, die komplizierte und störanfällige Teile vor allem im Innenbereich des Behälters vermied. Außerdem sollten die Behälterwand durchstoßende Führungen für Wellen, Achsen oder Leitungen vermieden werden, da sie einen zusätzlichen Aufwand für die Installation, die Abdichtung sowie für Kontrollen und Wartung mit sich brachten.

Durch die DE 196 44 203 A1 ist bereits eine Vorrichtung der eingangs zitierten Art bekannt, die den genannten Forderungen dadurch genügt, daß innerhalb des Behälters nur noch ein an der Behälterwand schwenkbar befestigter Schwimmer vorgesehen ist, der eine Auslöseeinheit trägt. Die Auslöseeinheit, die vorzugsweise von einem Magneten gebildet wird, wird mit dem Absinken des Schwimmers in die Nähe der Behälterwand bewegt, wodurch eine auf der Außenwand des Behälters angeordnete Kontakteinheit zum Öffnen veranlaßt wird. Hierdurch wird das Abschalten einer den Behälter entleerenden Pumpe verursacht. Bei steigendem Flüssigkeitsspiegel im Behälter wird der Schwimmer von der Behälterwand fortbewegt, die Kontakteinheit wird zum Schließen veranlaßt und die Pumpe wird eingeschaltet. Die Vorrichtung ist vergleichsweise einfach und unempfindlich, da sie wenige, unkompliziert gestaltete und arbeitende Teile besitzt, weil sich ihre elektrisch und elektronisch betriebenen Teile außerhalb des Behälters befinden und weil die Übermittlung des für einen vorgegebenen Flüssigkeitsstand relevanten Signals berührungslos aus dem Inneren des Behälters nach außen erfolgt.

Es sind auch bereits verschiedene Einrichtungen und Verfahren zur Feststellung und Überwachung von Füllständen in Flüssigkeitsbehältern bekannt, die mit verschiedenartigen physikalischen Wellen arbeiten und die somit ebenfalls eine berührungslose Signalübermittlung erlauben. Hierbei werden die von einem Sender ausgestrahlten Wellen reflektiert, während von einem Empfänger ein hiernach empfangenes oder ausbleibendes Echo bezüglich der jeweils hierin enthaltenen Aussage ausgewertet wird.

Eine erste Gruppe bilden die nach dem Radarprinzip arbeitenden Füllstandsmesser. Bei ihnen wird durch eine an der Oberseite des Flüssigkeitsbehälters angeordnete Sendeantenne ein Mikrowellensignal ausgestrahlt, das von der Flüssigkeitsoberfläche reflektiert wird. Das auf eine Empfangsantenne treffende reflektierte Signal wird bezüglich der zwischen der Aussendung und dem Empfang vergangenen Laufzeit ausgewertet, wobei die Laufzeit eine Aussage über die Füllstandshöhe im Behälter erlaubt. Die genannten Einrichtungen, für die die DE 195 10 484 C2, die DE 196 17 963 A1 und die DE 196 29 593 A1 Beispiele bilden, erlauben eine kontinuierliche Füllstandsmessung, sie sind daher auch entsprechend aufwendig. Da sie innerhalb des Behälters angeordnet und bis zu einem gewissen Grad der im Behälter befindlichen Flüssigkeit bzw. einem oberhalb der Flüssigkeit befindlichen Gas-Flüssigkeits-Gemisch ausgesetzt sind, ist ihr Einsatzbereich auf solche Flüssigkeiten beschränkt, die keine Gefahr für die Antennen oder deren Funktion darstellen. Als weiterer Nachteil kann der Umstand gesehen werden, daß eine solche Füllstandsmeßvorrichtung nur nach einem Öffnen des Behälters demontiert werden kann. Dies kann vor allem bei aggressiven und giftigen Flüssigkeiten eine in die Umgebung des Behälters wirkende Gefahr mit sich bringen.

Es sind auch bereits Ausführungen bekannt, bei denen Sende- und Empfangsteil des Füllstandsmeßgerätes hinter einem für Mikrowellen durchlässigen Fenster oder oberhalb einer den Behälterinnenraum dicht abschließenden Platte aus Glas, Keramik oder Kunststoff angeordnet sind. Um die Druckfestigkeit einer solchen Plane zu erhöhen, können an oder in der Plane Gitterstäbe vorgesehen werden, die annähernd orthogonal zur elektrischen Feldkomponente der Mikrowellen ausgerichtet sind. Die DE 44 07 823 C2 lehrt eine entsprechende Ausführung.

Eine zweite Gruppe der mit physikalischen Wellen arbeitenden Füllstandsmeßgeräte basiert auf der Anwendung von Ultraschall. Bei den verschiedenen Meßgeräten wird der Ultraschall in unterschiedlicher Weise genutzt. So ist beispielsweise durch die DE 42 40 690 C2 ein an der Außenseite des Behälterbodens angebrachter Ultraschallwandler bekannt, der über die Bodenwand Ultraschallschwingungen in Richtung der Flüssigkeitsoberfläche aussendet. Die dort reflektierten Wellen werden bezüglich ihrer von der Höhe des Flüssigkeitsstandes abhängigen Laufzeit ausgewertet.

Eine andere, in der DE 195 38 680 C2 beschriebene Ausführung besitzt an der Außenseite der seitlichen Behälterwand angeordnete Ultraschallwandler, die jeweils in der Höhe eines zu überwachenden Füllstandes montiert sind. Die auf die Behälterwand übertragenen Ultraschallschwingungen werden von der gegenüberliegenden Behälterwand reflektiert; die so entstehenden Echoimpulse werden ausgewertet. Da bei einer Überdeckung des Ultraschallwandlers durch im Behälter befindliche Flüssigkeit an der Meßstelle ein eindeutiges Echo feststellbar ist, während bei fehlender Überdeckung ein Echosignal ausbleibt, liefert diese Art der Füllstandsmessung eine sichere Aussage darüber, ob sich der Flüssigkeitsstand jeweils oberhalb oder unterhalb einer oder mehrerer Meßstellen befindet.

Die mit physikalischen Wellen arbeitenden Füllstandsmeßgeräte besitzen bei allen Unterschieden in den jeweils genutzten konkreten Meßmethoden gemeinsam die Möglichkeit, eine Messung von Füllstandshöhen vorzunehmen, ohne daß die Meßeinrichtung oder ein Teil von dieser mit dem gemessenen Gut in Berührung kommt.

Der Erfindung liegt die Aufgabe zugrunde, solche Füllstandsmeßgeräte für eine Vorrichtung nutzbar zu machen, bei welcher der Flüssigkeitsstand in einem Behälter mit Hilfe einer oder mehrerer von einer Steuereinrichtung geschalteter Pumpen in einem zwischen vorgegebenen Pegelständen gelegenen Bereich gehalten wird. Dabei soll jede Berührung des Meßgerätes mit der im Behälter befindlichen Flüssigkeit, auch in Form von Partikeln oder Dampf vermieden werden.

Die gestellte Aufgabe wird erfindungsgemäß gelöst durch eine Vorrichtung, die ein oder mehrere mit der Steuereinrichtung verbundene Module besitzt, welche an der Außenseite der Wand des Behälters angeordnet sind und welche über diese Wand physikalische Wellen aussenden und die erfolgende oder ausbleibende Reflexion der Wellen auswerten, wobei zumindest in dem für die Aussendung und Auswertung in Anspruch genommenen Bereich die Wand des Behälters aus einem die verwendete Wellenart leitenden Material besteht und wobei das oder die Module bezüglich ihrer Auswertung auf ein oder mehrere vorgegebene Flüssigkeitsniveaus festgelegt sind.

Sämtliche Teile der erfindungsgemäßen Vorrichtung, also auch deren Sensoren, befinden sich somit auf der Außenseite des Behälters und können daher nicht durch die im Behälter befindliche Flüssigkeit beeinträchtigt werden. Vor allem kann eine Montage, Überprüfung, Wartung und Demontage aller der Messung und Steuerung dienenden Teile ohne einen Eingriff in den Behälter erfolgen. Dies stellt nicht nur eine erhebliche Erleichterung für die genannten Arbeiten dar, es werden auch gegebenenfalls schädliche Einflüsse der im Behälter befindlichen Flüssigkeit auf Menschen und Umgebung bei der Durchführung der genannten Arbeiten vermieden. Da sich alle Teile der Vorrichtung außerhalb des Behälters befinden, werden bei einem etwa geforderten Explosionsschutz keine besonderen Maßnahmen oder Bauteile erforderlich. Tatsächlich können einfache Teile, wie Standardsensoren, verwendet werden.

Für die Anbringung der Module zur Aussendung und zum Empfang physikalischer Wellen werden in zweckmäßiger Ausgestaltung der Erfindung verschiedene Möglichkeiten vorgeschlagen:

Eine erste, in ihrer Installation wenig aufwendige Ausführung besitzt ein oder mehrere auf der Oberseite des Behälters angeordnete, mit einer Aussende- und einer Auswerteeinheit ausgestattete Module, welche jeweils auf die Oberfläche der im Behälter befindlichen Flüssigkeit gerichtete Wellen aussenden, wobei für die Auswertung der reflektierten Wellen jeweils ein oder mehrere Flüssigkeitsniveaus fest vorgegeben sind. Das oder die Module können dabei an verschiedene vorgegebene Behältergrößen und Flüssigkeitsniveaus angepaßte Schaltpunkte besitzen, die jeweils vor, während oder nach der Montage der Module einzustellen sind.

Eine weitere mögliche Ausführung besitzt ein oder mehrere seitlich an der Behälterwand angeordnete, mit einer Aussende- und einer Auswerteeinheit ausgestattete Module, welche sich jeweils in der Höhe eines zu überwachenden Flüssigkeitsniveaus befinden. Dabei dürfte es zweckmäßig sein, wenn die Module jeweils in der Höhe eines Einschaltniveaus, in der Höhe eines Ausschaltniveaus und in der Höhe eines Alarmniveaus angeordnet sind. Der Vorteil dieser Ausführung liegt darin, daß hier vergleichsweise einfache Module verwendet werden können, da sie nicht die Laufzeit reflektierter Wellen auswerten müssen, sondern lediglich das Vorhandensein oder Nichtvorhandensein eines Echos feststellen müssen.

Die Module, ob an der Oberseite des Behälters oder seitlich an der Behälterwand angeordnet, können vorteilhafterweise einzeln oder mit mehreren gemeinsam in einem dicht verschlossenen, in Richtung der Behälterwand für die jeweils verwendete Wellenart durchlässigen Gehäuse angeordnet sein. Das zweckmäßigerweise aus Kunststoff bestehende Gehäuse kann mit einer Steck- oder Klebeverbindung an der Außenwand des Behälters befestigt werden.

Bei der erfindungsgemäßen Vorrichtung können verschiedene Arten von physikalischen Wellen genutzt werden. Bevorzugt wird die Verwendung von elektromagnetischen Wellen sehr kurzer Länge. Bei dieser Wellenart bietet sich vor allem die Verwendung eines im Rotationsverfahren hergestellten Kunststoffbehälters an.

Eine weitere, ebenfalls vorteilhafte Möglichkeit besteht darin, Ultraschallwellen zu verwenden.

Ein vorteilhaftes Verfahren zum Betrieb einer der Erfindung entsprechenden Vorrichtung sieht vor, daß jeweils die Aussende- und Auswerteeinheit der die Höhe des Einschalt- und des Alarmniveaus detektierenden Module derart angesteuert werden, daß diese Module erst dann aktiviert werden, wenn das die Höhe des Ausschaltniveaus detektierende Modul eine Überschreitung des von ihm zu kontrollierenden Niveaus festgestellt hat, wobei der Ausschaltvorgang mit einer Zeitverzögerung nach Unterschreiten des Ausschaltniveaus erfolgt.

Bei der Verwendung mehrerer seitlich angebrachter Module wird ein Betriebsverfahren empfohlen, bei dem jeweils die Aussende- und Auswerteeinheit der in der Höhe des Einschalt- und des Alarmniveaus angeordneten Module derart angesteuert werden, daß diese Module erst dann aktiviert werden, wenn das in der Höhe des Ausschaltniveaus angeordnete Modul eine Überdeckung durch die im Behälter befindliche Flüssigkeit erfahren hat, wobei der Ausschaltvorgang ebenfalls mit einer Zeitverzögerung nach Unterschreiten des Ausschaltniveaus erfolgt.

Zu beiden genannten Verfahrensalternativen wird noch empfohlen, daß durch eine Plausibilitätsprüfung die Funktion der Aktoren der einzelnen Module überprüft wird.

Die erfindungsgemäße Vorrichtung wird insbesondere für Hebeanlagen für mit festen Beimengungen durchsetzte Flüssigkeiten, also beispielsweise für Abwasserhebeanlagen, empfohlen. Auch für Regenwassemutzungsanlagen sowie für Druckerhöhungsanlagen ist die erfindungsgemäße Vorrichtung mit Vorteil nutzbar.

Während bei den vorstehend genannten Anlagen ein prinzipiell ungeregelter Zulauf in den Behälter und ein geregeltes Abpumpen aus dem Behälter erfolgen, lassen sich die erfindungsgemäße Vorrichtung und die hierzu vorgeschlagenen Betriebsverfahren auch bei solchen Anlagen nutzen, bei denen ein bestimmtes Reservoir, dem sporadisch und ungeregelt Mengen entnommen werden, durch einen geregelten Zufluß aufrechterhalten werden soll.

Anhand zweier Ausführungsbeispiele wird die Erfindung näher erläutert. Die Zeichnung zeigt in
- Fig. 1: eine Hebeanlage für verschmutzte Flüssigkeiten, welche mit einer erfindungsgemäßen Vorrichtung ausgestattet ist,
- Fig. 2: eine weitere Hebeanlage, die mit einer alternativen, ebenfalls der Erfindung entsprechenden Vorrichtung ausgestattet ist.

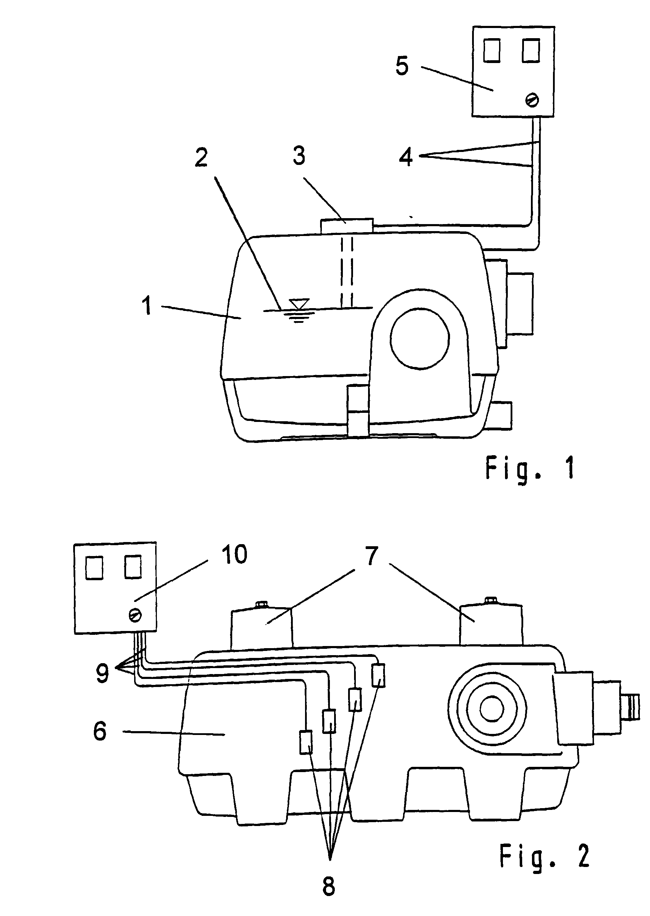

Die Hebeanlage der Fig. 1 besitzt einen Sammelbehälter 1 aus Kunststoff, der eine Flüssigkeit aufnimmt, welche in unregelmäßigen Abständen und mit unterschiedlicher Menge dem Sammelbehälter 1 zufließt. In der Fig. 1 ist ein Flüssigkeitsstand 2 symbolisch dargestellt. Durch eine - hier nicht dargestellte - Pumpe wird die Flüssigkeit aus dem Sammelbehälter 1 in ein Kanalnetz gefördert.

Der Messung des Flüssigkeitsstandes 2 im Sammelbehälter 1 dient ein Sensormodul 3, welches auf der Oberfläche des Sammelbehälters 1 angeordnet ist. Das Sensormodul 3 arbeitet nach dem Radarprinzip. Die von ihm ausgesandten Wellen werden von der Oberfläche der im Sammelbehälter 1 befindlichen Flüssigkeit reflektiert. Die reflektierten Wellen werden wiederum von dem Sensormodul empfangen. Aus der Laufzeit der Wellen wird der Abstand des Flüssigkeitsstandes 2 von dem Sensormodul 3 errechnet.

Mit Hilfe einer über elektrische Leitungen 4 mit dem Sensormodul 3 verbundenen Steuereinrichtung 5 wird die im Sammelbehälter 1 angeordnete Pumpe in Abhängigkeit des vom Sensormodul 3 gemessenen Flüssigkeitsstandes 2 ein- und ausgeschaltet. Es wird also die Pumpe bei einem vorgegebenen oberen Flüssigkeitsstand ein- und bei einem ebenfalls vorgegebenen unteren Flüssigkeitsstand ausgeschaltet. Oberhalb des der Einschaltung der Pumpe dienenden oberen Flüssigkeitsstandes ist noch ein Alarmniveau vorgegeben, dessen Erreichen das Versagen der Pumpe oder der Steuereinrichtung 5 signalisiert. Das bei Erreichen des Alarmniveaus abgegebene Signal wird in einer jeweils geeignet erscheinenden an die für die Überwachung der Hebeanlage zuständige Stelle geleitet.

Die in der Fig. 2 dargestellte Hebeanlage besitzt ebenfalls einen aus Kunststoff bestehenden Sammelbehälter 6. Der Entleerung des Sammelbehälters 6 dienen zwei in den Sammelbehälter 6 hineinreichende Kreiselpumpen 7.

Der Messung des Flüssigkeitsstandes im Sammelbehälter 6 dienen mehrere, in unterschiedlichen Höhen an der Seitenwand des Sammelbehälters 6 angeordnete Sensormodule 8, die ebenfalls nach dem Radarprinzip arbeiten. Die Sensormodule 8 sind über elektrische Leitungen 9 mit einer Steuereinrichtung 10 verbunden.

Die Sensormodule 8 sind einfacher geartet als die bei der Einrichtung der Fig. 1 verwendeten Sensormodule 3. Das hat seinen Grund darin, daß die Sensormodule 8 keine Laufzeitmessung vorzunehmen haben. Ihre Aufgabe besteht lediglich darin festzustellen, ob sich in Höhe ihres Anbringungsortes Flüssigkeit im Sammelbehälter 6 befindet. Hierzu ist es ausreichend, wenn ein für das Vorhandensein von Flüssigkeit signifikantes Echo von einem Sensormodul 8 empfangen wird.

Die in unterschiedlichen Höhen angebrachten Sensormodule 8 ermöglichen im Zusammenwirken mit der Steuereinrichtung 10 eine Betriebsweise der Hebeanlage, die sich durch wechselweises oder gleichzeitiges Einschalten der beiden Kreiselpumpen 7 an die jeweils gegebenen Bedingungen optimal anpaßt.

## Patentansprüche

1. Vorrichtung mit einem Flüssigkeit aufnehmenden Behälter und einer Steuereinrichtung, welche eine oder mehrere Pumpen in Abhängigkeit von der Höhe des Flüssigkeitsstandes in dem Behälter ein- oder ausschaltet, **gekennzeichnet durch** ein oder mehrere; mit der Steuereinrichtung (5, 10) verbundene Module (3, 8), welche an der Außenseite einer Wand des Behälters (1, 6) angeordnet sind und welche über diese Wand physikalische Wellen aussenden und die erfolgende Reflexion der Wellen auswerten, wobei zumindest in dem für die Aussendung und Auswertung in Anspruch genommenen Bereich die Wand des Behälters (1, 6) aus einem die verwendete Wellenart leitenden Material besteht und wobei das oder die Module (3, 8) bezüglich ihrer Auswertung auf ein oder mehrere vorgegebene Flüssigkeitsniveaus festgelegt sind.

2. Vorrichtung nach Anspruch 1, gekennzeichnet durch ein oder mehrere auf der Oberseite des Behältern (1) angeordnete, mit einer Aussende- und einer Auswerteeinheit ausgestattete Module (3), welche jeweils senkrecht auf die Oberfläche einer in dem Behälter (1) befindlichen Flüssigkeit gerichtete Wellen aussenden, wobei für die Auswertung der reflektierten Wellen jeweils ein oder mehrere Flüssigkeitsniveaus fest vorgegeben sind.

3. Vorrichtung nach Anspruch 2, dadurch gekennzeichnet, daß das oder die Module (3) an verschiedene vorgegebene Behältergrößen und Flüssigkeitsniveaus angepaßte, jeweils bei der Montage der Module (3) einzusteilende Schaltpunkte besitzen.

4. Vorrichtung nach Anspruch 1, gekennzeichnet durch ein oder mehrere seitlich an der Behälterwand angeordnete, mit einer Aussende- und einer Auswerteeinheit ausgestattete Module (8) , welche sich jeweils in der Höhe eines zu überwachenden Flüssigkeitsniveaus befinden.

5. Vorrichtung nach Anspruch 4, dadurch gekennzeichnet, daß in der Höhe eines Einschaltniveaus, in der Höhe eines Ausschaltniveaus und in der Höhe eines Alarmniveaus jeweils ein Modul (8) angeordnet ist.

6. Vorrichtung nach einem der Ansprüche 1 bis 5, dadurch gekennzeichnet, daß jedes Modul (3 ,8) in einem dicht verschlossenen, in Richtung der Behälterwand für die jeweils verwendete Wellenart durchlässigen Gehäuse angeordnet ist.

7. Vorrichtung nach einem der Ansprüche 1 bis 5, dadurch gekennzeichnet, daß mehrere Module (3, 8) gemeinsam in einem dicht verschlossenen, in Richtung der Behälterwand für die jeweils verwendete Wellenart durchlässigen Gehäuse angeordnet sind.

8. Vorrichtung nach einem der Ansprüche 6 oder 7, dadurch gekennzeichnet, daß das Gehäuse aus Kunststoff besteht.

9. Vorrichtung nach einem der Ansprüche 6 bis 8, dadurch gekennzeichnet, daß das Gehäuse mit einer Steckverbindung an der Außenwand des Behälters (1, 6)befestigt ist.

10. Vorrichtung nach einem der Ansprüche 6 bis 8, dadurch gekennzeichnet, daß das Gehäuse mit einer Klebeverbindung an der Außenwand des Behälters (1,6) befestigt ist.

11. Vorrichtung nach einem der Ansprüche 1 bis 10, gekennzeichnet durch die Verwendung von elektromagnetischen Wellen sehr kurzer Länge.

12. Vorrichtung nach einem der Ansprüche 1 bis 11, gekennzeichnet durch einen im Rotationsverfahren hergestellten Kunststoffbehälter (1, 6).

13. Vorrichtung nach einem der Ansprüche 1 bis 10, gekennzeichnet durch die Verwendung von Ultraschallwellen.

14. Verfahren zum Betrieb einer Vorrichtung nach einem der Ansprüche 1 bis 13, dadurch gekennzeichnet, daß jeweils die Aussende- und Auswerteeinheit der die Höhe des Einschalt- und des Alarmniveaus detektierenden Module (8) derart angesteuert werden, daß diese Module (8) erst dann aktiviert werden, wenn das die Höhe des Ausschaltniveaus detektierende Modul eine Überschreitung des von ihm zu kontrollierenden Niveaus festgestellt hat, wobei der Ausschaltvorgang mit einer Zeitverzögerung nach Unterschreiten des Ausschaltniveaus erfolgt.

15. Verfahren zum Betrieb einer Vorrichtung nach den Ansprüchen 5 und 14, dadurch gekennzeichnet, daß jeweils die Aussende- und Auswerteeinheit der in der Höhe des Einschalt- und des Alarmniveaus angeordneten Module (8) derart angesteuert werden, daß diese Module erst dann aktiviert werden, wenn das in der Höhe des Ausschaltniveaus angeordnete Modul eine Überdeckung durch die im Behälter (6) befindliche Flüssigkeit erfahren hat, wobei der Ausschaltvorgang mit einer Zeitverzögerung nach Unterschreiten des Ausschaltniveaus erfolgt.

16. Verfahren zum Betrieb einer Vorrichtung nach einem der Ansprüche 1 bis 15, dadurch gekennzeichnet, daß durch eine Plausibilitätsprüfung die Funktion der Aktoren der einzelnen Module (8) überprüft wird.

17. Verfahren zum Betrieb einer Vorrichtung nach einem der Ansprüche 1 bis 16, dadurch gekennzeichnet, daß die Stromzufuhr zu der Vorrichtung nach einem über eine vorgegebene Zeitspanne hinausgehenden Stillstand des Flüssigkeitspegels unterbrochen und bei erneuter Pegeländerung wieder aktiviert wird.

18. Verwendung einer Vorrichtung nach einem der Ansprüche 1 bis 13 für eine Hebeanlage für mit festen Beimengungen durchsetzte Flüssigkeiten.

19. Verwendung einer Vorrichtung nach einem der Ansprüche 1 bis 13 für eine Regenwassemutzungsanlage.

20. Verwendung einer Vorrichtung nach einem der Ansprüche 1 bis 13 für eine Druckerhöhungsanlage.
